# EUROPÄISCHE PATENTSCHRIFT

(11) **EP 2 012 989 B1**
(45) Veröffentlichungstag und Bekanntmachung des Hinweises auf die Patenterteilung: **19.09.2012**
(21) Anmeldenummer: 08701122.7
(22) Anmeldetag: 16.01.2008
(51) Int. Cl.: B28B 21/70, F16L 57/00, F16L 58/10, F17D 5/02

(54) **VERFAHREN ZUM HERSTELLEN EINER SAMMELLEITUNG ZUR ERKENNUNG UND ORTUNG EINES BEI EINER LECKAGE IN DIE UMGEBUNG DER SAMMELLEITUNG AUSTRETENDEN STOFFES SOWIE MIT DIESEM VERFAHREN HERGESTELLTE SAMMELLEITUNG**
METHOD FOR THE PRODUCTION OF A COLLECTING LINE FOR DETECTING AND LOCATING AN AGENT DISCHARGING INTO THE ENVIRONMENT OF THE COLLECTING LINE IN CASE OF LEAKAGE, AND COLLECTING LINE PRODUCED BY MEANS OF THIS METHOD
PROCÉDÉ DE FABRICATION D'UNE CONDUITE COLLECTRICE POUR DÉTECTER ET LOCALISER UNE SUBSTANCE S'ÉCHAPPANT DANS L'ENVIRONNEMENT DE LA CONDUITE COLLECTRICE À L'OCCASION D'UNE FUITE, ET CONDUITE COLLECTRICE FABRIQUÉE SELON CE PROCÉDÉ

(30) Priorität: 06.02.2007 DE 102007005693
(43) Veröffentlichungstag der Anmeldung: 14.01.2009
(73) Patentinhaber: Areva NP GmbH, 91052 Erlangen (DE)
(72) Erfinder: STORB, Karl-Heinz, 91487 Vestenbergsgreuth (DE); BALTHASAR, Arno, 90469 Nürnberg (DE); ZACH, Jan, 91058 Erlangen (DE); KNOBLACH, Walter, 91301 Forchheim (DE); WITTMANN, Hans-Joachim, 91088 Bubenreuth (DE)
(74) Vertreter: Mörtel & Höfner
(86) Internationale Anmeldenummer: PCT/EP2008/000269
(87) Internationale Veröffentlichungsnummer: WO 2008/095583

(56) Entgegenhaltungen:
- EP-A- 0 175 219
- DE-A1- 3 434 323
- DE-A1- 10 009 528
- DE-A1-102005 007 988

## Beschreibung

Die Erfindung betrifft ein Verfahren zum Herstellen einer Sammelleitung zur Erkennung und Ortung eines aus einem Anlagenteil, beispielsweise einer Pipeline, bei einer Leckage in die Umgebung der Sammelleitung austretenden Stoffes, wie sie beispielsweise aus der EP 0 175 219 B1 bekannt ist.

Die aus der EP 0 175 219 B1 bekannte Sammelleitung besteht aus einem Trägerrohr, das an seiner Außenoberfläche mit einer permeablen Schicht oder Umhüllung versehen ist, durch die ein aus einer Leckage in der Anlage, beispielsweise eine Pipeline, in die Umgebung der Sammelleitung austretender und zu detektierender Stoff diffundieren kann. Das Trägerrohr ist für diesen Stoff undurchlässig. Seine Wand ist mit Öffnungen versehen, so dass der durch die permeable Schicht hindurchtretende Stoff durch diese Öffnungen in das Innere der Sammelleitung gelangen kann. Mit einem aus der DE 24 31 907 C3 bekannten Verfahren wird dann der Ort ermittelt, an dem der Stoff in die Sammelleitung eingedrungen ist. Dieser Ort entspricht der Stelle, an der der Stoff aus dem überwachten Anlagenteil ausgetreten ist. Hierzu wird mit einer an die Sammelleitung angeschlossenen Pumpe der in die Sammelleitung eingedrungene Stoff gemeinsam mit einem in der Sammelleitung befindlichen Trägergas einem ebenfalls an die Sammelleitung angeschlossenen Sensor zugeleitet. Bei bekannter Strömungsgeschwindigkeit kann aus der Zeitspanne zwischen dem Einschalten der Pumpe und dem Eintreffen des Stoffes am Sensor der Ort, an dem der Stoff in die Sammelleitung eindringt und damit der Leckageort am Anlagenteil ermittelt werden.

Als Werkstoff für die permeable Schicht hat sich dabei in einer Vielzahl von Anwendungsfällen Ethylenvinylacetat EVA als besonders geeignet herausgestellt, das beispielsweise auf das aus PVC bestehende Trägerrohr in einem Extrusionsverfahren aufgebracht wird. In der Praxis treten jedoch Anwendungsfälle auf, beispielsweise extreme Umgebungsbedingungen oder der Nachweis bestimmter Stoffe, bei denen der Einsatz von Werkstoffen für die permeable Schicht erforderlich ist, die sich nicht in einer einfachen Weise thermoplastisch verarbeiten und auf ein Trägerrohr aufbringen lassen. So ist beispielsweise der Einsatz von EVA als permeable Schicht unter Umgebungsbedingungen problematisch, bei denen sehr tiefe Temperaturen auftreten können, wie dies beispielsweise bei der Überwachung von überirdisch verlegten Ölpipelines in arktischen oder subarktischen Gebieten der Fall ist. Es hat sich nämlich gezeigt, dass die Diffusionsgeschwindigkeit der nachzuweisenden Stoffe durch eine Wand aus EVA signifikant mit der Temperatur sinkt und in der Praxis den Einsatzbereich von EVA als permeable Schicht einer solchen Sammelleitung auf Temperaturen oberhalb von 0°C begrenzt. Unter diesen Umgebungsbedingungen und für die in diesem Fall nachzuweisenden Stoffe hat sich als Werkstoff für die permeable Schicht insbesondere Silikonkautschuk als geeignet herausgestellt. Das Aufbringen von Silikonkautschuk auf ein aus einem Thermoplasten mit relativ niedriger Schmelz- oder Erweichungstemperatur, beispielsweise PVC, bestehendes langes Trägerrohr stellt jedoch ein erhebliches fertigungstechnisches Problem dar.

Aus DE 100 09 528 C2 ist eine Vorrichtung zum Aufbringen von elastischen Schlauchabschnitten auf zylindrische Leitungen bekannt. Hierzu werden Schlauchabschnitte zunächst in ein Werkzeug gelegt. Danach wird ein doppelwandiges Rohr mit Druckluft beaufschlagt und dieses Rohr durch die sich im Werkzeug befindlichen Schlauchabschnitte geführt. Anschließend wird durch dieses Rohr die zu ummantelnde Leitung hineingeschoben und dann das Rohr aus dem Werkzeug wieder herausgezogen. Die Schlauchabschnitte sind somit an der richtigen Position an der Leitung aufgebracht. Durch die Verwendung des Werkzeugs und des zusätzlichen Rohres, das mit Druckluft beaufschlagt wird, ist dieses Verfahren jedoch aufwändig und erfordert eine Vielzahl von Arbeitsschritten.

Der Erfindung liegt nun die Aufgabe zu Grunde, ein Verfahren zum Herstellen einer Sammelleitung zur Erkennung und Ortung eines bei einer Leckage in die Umgebung der Sammelleitung austretenden Stoffes anzugeben, mit dem es besonders effizient möglich ist, ein Trägerrohr auch mit Werkstoffen zu umhüllen bzw. zu beschichten, die nicht in einfacher Weise und bei niedrigen Temperaturen thermoplastisch verarbeitbar sind. Außerdem liegt der Erfindung die Aufgabe zu Grunde, eine mit diesem Verfahren hergestellte Sammelleitung anzugeben.

Hinsichtlich des Verfahrens wird die genannte Aufgabe gemäß der Erfindung gelöst mit den Merkmalen des Patentanspruches 1. Bei dem Verfahren zum Herstellen einer Sammelleitung zur Erkennung und Ortung eines bei einer Leckage in die Umgebung der Sammelleitung austretenden Stoffes, mit einem Trägerrohr, dessen Wand mit Öffnungen versehen ist, die mit einem für den Stoff permeablen elastischen Werkstoff verschlossen sind, sind gemäß der Erfindung folgende Verfahrensschritte vorgesehen:
a1) Ein aus dem permeablen elastischen Werkstoff bestehender Schlauch, dessen Innendurchmesser gleich oder kleiner ist als der Außendurchmesser des Trägerrohres, wird zumindest auf einem Teil seiner Länge durch Erzeugen einer Druckdifferenz zwischen dem Innenraum und dem Außenraum des Schlauches elastisch aufgeweitet, indem
a2) der Schlauch in eine zumindest auf einem Teil ihrer Länge doppelwandige Montagevorrichtung mit einem hohlzylindrischen Montagerohr eingeführt wird,
a3) das Montagerohr
a3.1) ist von einem davon radial beabstandeten Außenrohr umgeben,
a3.2) weist einen Innendurchmesser auf, der größer ist als der Außendurchmesser des Schlauches im entspannten Zustand,
a3.3) kommuniziert über eine Mehrzahl von an seinem Umfang angeordneten Öffnungen mit einer zwischen dem Montagerohr und dem Außenrohr befindlichen, das Montagerohr umgebenden und sich in Längsrichtung erstreckenden Kammer,
a4) an die Kammer ist zumindest eine Vakuumpumpe angeschlossen,
b) der Schlauch wird an seinen Enden dicht an die Montagevorrichtung derart angelegt, dass der zwischen dem Schlauch und dem Montagerohr befindliche und mit der Kammer kommunizierende Hohlraum nach außen dicht verschlossen ist,
c) die Kammer wird zum Erzeugen des Unterdrucks evakuiert,
d) in den radial aufgeweiteten Schlauch wird das Trägerrohr eingeführt, und
e) der radial aufgeweitete Schlauch wird durch Verringern der Druckdifferenz an die Außenoberfläche des Trägerrohrs angelegt.

Durch diese Maßnahme haftet der Schlauch unter Reibschluss an der Außenoberfläche des Trägerrohrs. Dieser Reibschluss wird zusätzlich erhoht, wenn der Innendurchmesser des entspannten kräftefreien Schlauches, vorzugsweise ein aus Silikonkautschuk bestehender Schlauch, kleiner ist als der Außendurchmesser des Trägerrohrs, wobei der Schlauch vorzugsweise elastisch mit dem Trägerrohr verspannt wird.

Die Anzahl der erforderlichen Öffnungen hängt von der Länge der Montagevorrichtung und den Elastizitätseigenschaften des Schlauches ab und muss derart bemessen sein, dass der Hohlraum auf seiner gesamten Länge gleichmäßig evakuiert werden kann, um das Entstehen nicht evakuierter sackähnlicher Zonen zu vermeiden. Dadurch ist diese Ausgestaltung des Verfahrens besonders für lange Montagevorrichtungen geeignet.

Um das Einführen des Trägerrohrs zu erleichtern, ist der Innendurchmesser des Schlauches im aufgeweiteten Zustand größer als der Außendurchmesser des Trägerrohres. Zusätzlich kann ein Gleitmittel, beispielsweise Talkum, aufgebracht werden, mit dem die Reibung zwischen Schlauch und Trägerrohr verringert wird.

Durch diese Maßnahmen ist es möglich, eine Sammelleitung herzustellen, bei der das Trägerrohr von einem die Öffnungen dicht verschließenden, aus einem elastischen semipermeablen Werkstoff bestehenden und unter Reibschluss an der Außenoberfläche des Trägerrohrs anliegenden und insbesondere elastisch mit diesem in Umfangsrichtung verspannten, vorzugsweise aus einem Silikonkautschuk bestehenden Schlauch umgeben ist.

Zur weiteren Erläuterung der Erfindung wird auf das Ausführungsbeispiel der Zeichnung verwiesen. Es zeigen:

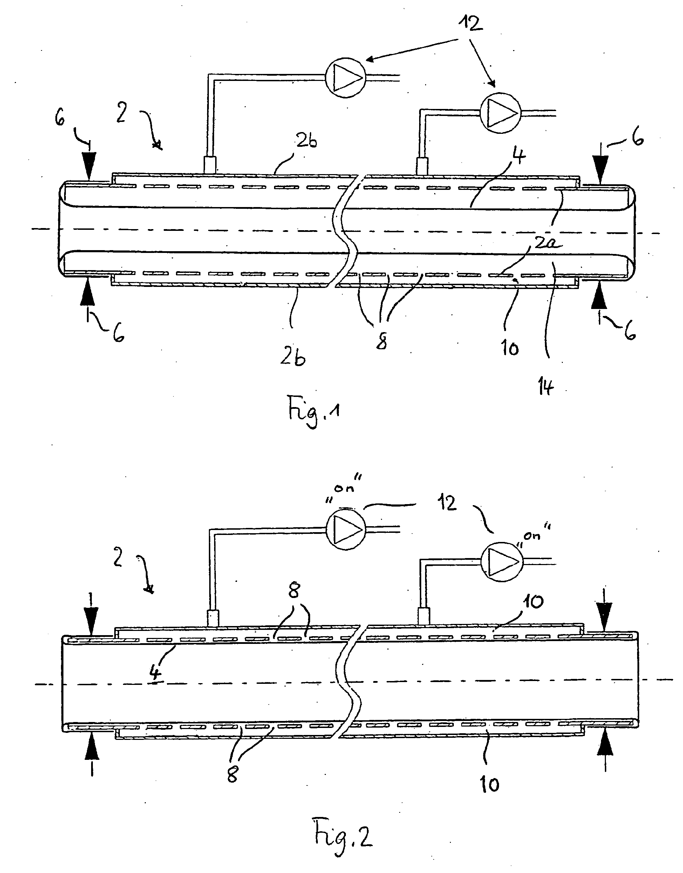

Figuren 1 bis 4 den Verfahrensablauf gemäß der Erfindung jeweils in einem schematischen Prinzipbild mit einer doppelwandigen Montagevorrichtung.

Gemäß Figur 1 wird in eine doppelwandige, aus einem hohlzylindrischen Montagerohr 2a und einem Außenrohr 2b bestehende Montagevorrichtung 2 ein als Umhüllung oder Beschichtung eines Trägerrohrs vorgesehener Schlauch 4 aus einem elastischen Werkstoff, insbesondere Silikonkautschuk, eingeführt und an den Enden der Montagevorrichtung 2 vakuumdicht mit diesem verbunden. Der Außendurchmesser des Schlauches 4 ist im entspannten Zustand, d.h. wenn keine axialen oder radialen Kräfte auf ihn ausgeübt werden, kleiner als der Innendurchmesser des Montagerohrs 2a. Im Ausführungsbeispiel wird der Schlauch 4 hierzu an den Enden der Montagevorrichtung 2 umgestülpt und wie dies durch die Pfeile 6 angedeutet ist, mittels einer Schlauchklemme am überstehenden Montagerohr 2a fixiert. Das Montagerohr 2a ist zumindest auf einem Teil seiner Länge mit einer Mehrzahl von an seinem Umfang gleichmäßig verteilten Öffnungen oder Perforationen 8 versehen, über die es mit einer zwischen dem Innenrohr 2a und dem Außenrohr 2b gebildeten, das Montagerohr 2a im Bereich der Öffnungen 8 umgebenden Kammer 10 kommuniziert. Im Ausführungsbeispiel ist das Außenrohr 2b an seinen Stirnseiten vakuumdicht mit dem Montagerohr 2a verbunden. Eine solche vakuumdichte Verbindung ist jedoch nicht erforderlich, wenn das Außenrohr 2b bis zur Stirnseite des Montagerohrs 2a geführt ist und der Schlauch 4 vakuumdicht um das Außenrohr 2b gestülpt ist.

Das Außenrohr 2b ist vorzugsweise hohlzylindrisch, um eine möglichst gleichmäßige Druckverteilung am Umfang des Innenrohrs 2a zu erzeugen. Grundsätzlich ist aber die geometrische Form des Außenrohrs nicht auf eine Zylindergeometrie beschränkt.

An die Kammer 10 sind eine Mehrzahl von Vakuumpumpen 12 angeschlossen, über die es möglich ist, den zwischen Außenrohr 2b und Schlauch 4 gebildeten Hohlraum 14 gleichmäßig zu evakuieren.

Die beim Evakuieren des Hohlraums 14 entstehende Situation ist in Fig. 2 dargestellt. Durch die zwischen dem Innenraum des Schlauches 4, in dem in der Regel der Umgebungsdruck herrscht, und dem durch die Kammer 10 bzw. den Hohlraum 14 gebildeten Außenraum des Schlauches 4 beim Einschalten ("on") der Vakuumpumpen 12 entstehende Druckdifferenz wird der Schlauch 4 radia1 aufgeweitet und legt sich an die Innenoberfläche des Montagerohrs 2a an. Der Abstand der Öffnungen 8 sowie ihre Weite sind dabei so bemessen, dass sich der Schlauch 4 gleichmäßig an die Innenoberfläche des Montagerohrs 2a anlegt, ohne in die Öffnungen 8 eingezogen zu werden.

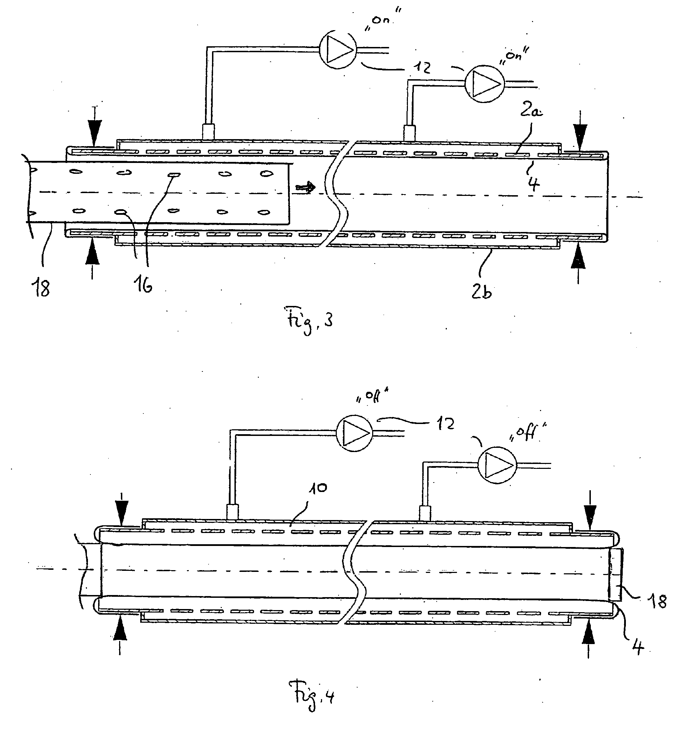

Nachdem der Schlauch 4 elastisch aufgeweitet ist, wird nun in den Schlauch 4 ein mit der Umhüllung oder Beschichtung zu versehendes, an seiner Wand mit einer Vielzahl von Öffnungen 16 versehenes Trägerrohr 18 eingeführt. Anschließend wird gemäß Figur 4 die Kammer 10 belüftet (Vakuumpumpen 12 "off"), und der Schlauch 4, der im entspannten, kräftefreien Zustand einen Innendurchmesser hat, der gleich oder kleiner ist als der Außendurchmesser des Trägerrohrs 18, legt sich an die Außenoberfläche des Trägerrohrs 18 an. Der Schlauch 4 ist axial und in Umfangsrichtung reibschlüssig an der Außenoberfläche des Trägerrohres 18 fixiert und mit diesem, falls sein Innendurchmesser im entspannten kräftefreien Zustand kleiner ist als der Außendurchmesser des Trägerrohrs 18, elastisch in Umfangsrichtung verspannt und dichtet dabei die im Trägerrohr 18 gem. Fig. 3 befindlichen Öffnungen 16 ab.

Die Herstellung der Umhüllung erfolgt dabei in einer entsprechend langen Montagevorrichtung 2 in einem einzigen Fertigungschritt. Grundsätzlich ist es aber auch möglich, ein sehr langes Trägerrohr 18 schrittweise mit der Umhüllung zu versehen, indem dieses nach einem Beschichtungsvorgang vollständig aus der Montagevorrichtung 2 herausgezogen wird. Anschließend wird ein neuer Schlauch 4 in die Montagevorrichtung 2 eingesetzt und aufgeweitet. In einem darauf folgenden Schritt wird das Trägerrohr 18 durch die Montagevorrichtung 2 hindurchgeschoben, bis der an dem bereits umhüllten Abschnitt angrenzende, noch nicht mit der Umhüllung versehene Abschnitt sich innerhalb der Montagevorrichtung 2 befindet, so dass die Umhüllungen sich abschnittsweise entweder überdecken oder aneinander stoßen.

## Patentansprüche

1. Verfahren zum Herstellen einer Sammelleitung zur Erkennung und Ortung eines bei einer Leckage in die Umgebung der Sammelleitung austretenden Stoffes, mit einem Trägerrohr (18), dessen Wand mit Öffnungen (16) versehen ist, die mit einem für den Stoff permeablen elastischen Werkstoff verschlossen sind, mit folgenden Verfahrensschritten:
a1) Ein aus dem permeablen elastischen Werkstoff bestehender Schlauch (4), dessen Innendurchmesser gleich oder kleiner ist als der Außendurchmesser des Trägerrohres (18), wird zumindest auf einem Teil seiner Länge durch Erzeugen einer Druckdifferenz zwischen dem Innenraum und dem Außenraum des Schlauches (4) elastisch aufgeweitet, indem
a2) der Schlauch (4) in eine zumindest auf einem Teil ihrer Lange doppelwandige Montagevorrichtung (2) mit einem hohlzylindrischen Montagerohr (2a) eingeführt wird,
a3) das Montagerohr (2a)
a3.1) ist von einem davon radial beabstandeten Außenrohr (2b) umgeben,
a3.2) weist einen Innendurchmesser auf, der größer ist als der Außendurchmesser des Schlauches (4) im entspannten Zustand,
a3.3) kommuniziert über eine Mehrzahl von an seinem Umfang angeordneten Öffnungen (8) mit einer zwischen dem Montagerohr (2a) und dem Außenrohr (2b) befindlichen, das Montagerohr (2a) umgebenden und sich in Längsrichtung erstreckenden Kammer (10),
a4) an die Kammer (10) ist zumindest eine Vakuumpumpe (12) angeschlossen,
b) der Schlauch (4) wird an seinen Enden dicht an die Montagevorrichtung (2) derart angelegt, dass der zwischen dem Schlauch (4) und dem Montagerohr (2a) befindliche und mit der Kammer (10) kommunizierende Hohlraum (14) nach außen dicht verschlossen ist,
c) die Kammer (10) wird zum Erzeugen des Unterdrucks evakuiert,
d) in den radial aufgeweiteten Schlauch (4) wird das Trägerrohr (18) eingeführt, und
e) der radial aufgeweitete Schlauch (4) wird durch Verringern der Druckdifferenz an die Außenoberfläche des Trägerrohrs (18) angelegt.

2. Verfahren nach Anspruch 1, bei dem der Innendurchmesser des Schlauches (4) im aufgeweiteten Zustand größer als der Außendurchmesser des Trägerrohres (18) ist.

3. Verfahren nach Anspruch 1 oder 2, bei dem der Schlauch (4) in Umfangsrichtung elastisch mit dem Trägerrohr (18) verspannt wird.

4. Verfahren nach einem der vorhergehenden Ansprüche, bei dem ein Schlauch (4) aus einem Silikonkautschuk verwendet wird.

## Claims

1. Method for producing a collecting line for detecting and locating an agent discharging into the environment of the collecting line in case of leakage, said collecting line comprising a carrier pipe (18), of which the wall is provided with openings (16), which are sealed by a resilient material permeable for the agent, said method comprising the following steps:
a1) a hose (4) consisting of the permeable resilient material and of which the inner diameter is equal to or smaller than the outer diameter of the carrier pipe (18) is resiliently expanded, at least over part of its length, by generating a pressure difference between the interior and the exterior of the hose (4) by
a2) introducing the hose (4) into a mounting device (2), which is double-walled at least over part of its length and has a hollow-cylindrical mounting pipe (2a),
a3) the mounting pipe (2a)
a3.1) being surrounded by an outer pipe (2b) distanced radially therefrom,
a3.2) having an inner diameter greater than the outer diameter of the hose (4) in the relaxed state,
a3.3) communicating, via a plurality of openings (8) arranged over its periphery, with a chamber (10) which is disposed between the mounting pipe (2a) and the outer pipe (2b), surrounds the mounting pipe (2a) and extends in a longitudinal direction, and by
a4) connecting at least one vacuum pump (12) to the chamber (10),
b) the ends of the hose (4) are applied tightly against the mounting device (2), such that the hollow space (14) which is disposed between the hose (4) and the mounting pipe (2a) and which communicates with the chamber (10) is sealed outwardly in a tight manner,
c) the chamber (10) is evacuated to generate the vacuum,
d) the carrier pipe (18) is introduced into the radially expanded hose (4), and
e) the radially expanded hose (4) is applied against an outer surface of the carrier pipe (18) by reducing the pressure difference.

2. Method according to claim 1, wherein the inner diameter of the hose (4) in the expanded state is greater than the outer diameter of the carrier pipe (18).

3. Method according to claim 1 or 2, wherein the hose (4) is resiliently braced in the peripheral direction with the carrier pipe (18).

4. Method according to one of the preceding claims, wherein a hose (4) made of a silicone rubber is used.

## Revendications

1. Procédé de fabrication d'un collecteur pour la détection et la localisation d'une substance s'échappant dans l'environnement du collecteur lors d'une fuite, comportant un tuyau support (18) dont la paroi est pourvue d'ouvertures (16) qui sont fermées par un matériau élastique perméable à la substance, comprenant les étapes opératoires suivantes :
a1) un tuyau (4) composé du matériau élastique, dont le diamètre intérieur est inférieur ou égal au diamètre extérieur du tuyau support (18), est dilaté élastiquement au moins sur une partie de sa longueur par création d'une différence de pression entre l'intérieur et l'extérieur du tuyau (4),
a2) introduire le tuyau (4) avec un tuyau de montage cylindrique creux (2a) dans un dispositif de montage (2) ayant une double paroi au moins sur une partie de sa longueur,
a3) le tuyau de montage (2a)
a3.1) est entouré d'un tuyau extérieur (2b) qui en est espacé radialement,
a3.2) présente un diamètre intérieur qui est supérieur au diamètre extérieur du tuyau (4) en état détendu,
a3.3) communique par une pluralité d'ouvertures (8) pratiquées sur sa circonférence avec une chambre (10) se trouvant entre le tuyau de montage (2a) et le tuyau extérieur (2b), entourant le tuyau de montage (2a) et s'étendant dans le sens longitudinal,
a4) la chambre (10) est raccordée au moins à une pompe à vide (12),
b) le tuyau (4) est étroitement posé par ses extrémités sur le dispositif de montage (2) de manière à ce que la cavité (14) se trouvant entre le tuyau (4) et le tuyau de montage (2a) et communiquant avec la chambre (10) soit fermée hermétiquement vers l'extérieur,
c) la chambre (10) est évacuée pour créer la dépression,
d) le tuyau support (18) est introduit dans le tuyau dilaté radialement (4), et
e) le tuyau dilaté radialement (4) est posé en réduisant la différence de pression à la surface extérieure du tuyau support (18).

2. Procédé selon la revendication 1, dans lequel le diamètre intérieur du tuyau (4) en état dilaté est supérieur au diamètre extérieur du tuyau support (18).

3. Procédé selon la revendication 1 ou 2, dans lequel le tuyau (4) est tendu élastiquement par le tuyau support (18) dans le sens circonférentiel.

4. Procédé selon une des revendications précédentes, dans lequel on utilise un tuyau (4) en caoutchouc silicone.
